(19) Europäisches Patentamt
European Patent Office
Office européen des brevets

(11) EP 4 711 393 A1

(12) # EUROPEAN PATENT APPLICATION
published in accordance with Art. 153(4) EPC

(43) Date of publication:
**18.03.2026 Bulletin 2026/12**

(21) Application number: **24912287.0**

(22) Date of filing: **06.12.2024**

(51) International Patent Classification (IPC):
***C08F 299/08** (2006.01)* ***C08F 2/44** (2006.01)*

(52) Cooperative Patent Classification (CPC):
**C08F 2/44; C08F 299/08**

(86) International application number:
**PCT/JP2024/043176**

(87) International publication number:
**WO 2025/142397 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.12.2023 JP 2023220280**
**26.04.2024 JP 2024072124**

(71) Applicant: **SHIN-ETSU CHEMICAL CO., LTD.**
**Tokyo 100-0005 (JP)**

(72) Inventors:
- **MATSUMOTO Nobuaki**
  **Annaka-shi, Gunma 379-0224 (JP)**
- **KITAGAWA Taichi**
  **Annaka-shi, Gunma 379-0224 (JP)**
- **SAKAMOTO Akira**
  **Annaka-shi, Gunma 379-0224 (JP)**

(74) Representative: **Mewburn Ellis LLP**
**Aurora Building**
**Counterslip**
**Bristol BS1 6BX (GB)**

(54) **ULTRAVIOLET-CURABLE SILICONE COMPOSITION FOR STEREOLITHOGRAPHY AND CURED PRODUCT THEREOF**

(57) Provided is an ultraviolet-curable silicone composition for stereolithography comprising:
(A) organopolysiloxane having two groups indicated by formula (1) in a molecule

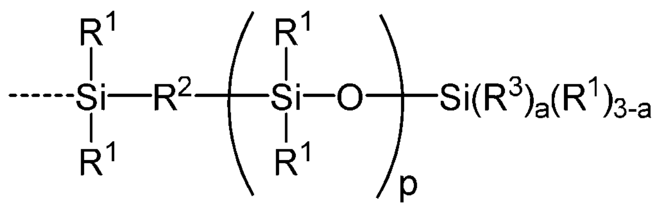

(1)

(in the formula, $R^1$ represents a monovalent hydrocarbon group, $R^2$ represents an oxygen atom or an alkylene group, and $R^3$ represents an acryloyloxyalkyl group, a methacryloyloxyalkyl group, an acryloyloxyalkyloxy group, a methacryloyloxyalkyloxy group, a (acryloyloxyalkyl) dimethylsilyloxy group, or a (methacryloyloxyalkyl) dimethylsilyloxy group, where p represents a number satisfying $0 \leq p \leq 10$, and a represents a number satisfying $1 \leq a \leq 3$);
(B) hydrophobic silica particles having an average particle diameter of 10-1,000 nm and a degree of hydrophobicity of 60% or more by a methanol titration method; and
(C) a photopolymerization initiator.

EP 4 711 393 A1

**Description**

TECHNICAL FIELD

This invention relates to a ultraviolet-curable silicone composition for stereolithography or optical fabrication and a cured product thereof.

BACKGROUND ART

Recently, active efforts are made to develop fabrication materials for use in 3D printers. A variety of materials covering from metals to resins are used in optical fabrication. Of the resins, acrylate and urethane acrylate based photocurable resin compositions are often used, but cured products thereof are very hard and inflexible (Patent Document 1).

Depending on a particular application, flexible silicone materials are necessary in many cases. Silicone materials for 3D printers have been developed to comply with a particular type of fabrication. As the optical fabrication material, for example, Patent Document 2 describes a composition comprising an alkenyl-containing organopolysiloxane, a mercapto-containing organopolysiloxane, and a MQ resin. In Patent Document 3, a silicone composition containing a platinum catalyst adapted to be activated with UV is proposed for the dispensing technology. Patent Document 4 discloses a heat-curable silicone composition for 3D printers.

Patent Document 5 discloses a UV-curable low-viscosity silicone material for 3D printers of ink jet type. This material has the advantages of brief cure by UV irradiation and a quite high accuracy of fabrication, but suffers from poor mechanical strength and heat resistance as compared with conventional silicone materials.

Then, Patent Documents 6 and 7 describe the development of UV-curable silicone compositions for the optical fabrication material which is increasingly demanded in these days.

However, some of these compositions are brittle due to low elongation as compared with the mechanical strength of heat-curable silicone compositions. Nowadays, the optical fabrication at a higher viscosity than in the prior art is possible.

PRIOR ART DOCUMENTS

PATENT DOCUMENTS

Patent Document 1: JP 5890990
Patent Document 2: JP 4788863
Patent Document 3: JP 5384656
Patent Document 4: JP 6727290
Patent Document 5: JP 6687111
Patent Document 6: JP 6962290
Patent Document 7: JP 7342910

SUMMARY OF INVENTION

TECHNICAL PROBLEM

An object of the invention, which has been made under the above-mentioned circumstances, is to provide a UV-curable silicone composition which has a viscosity compatible with stereolithography of the laser system or digital light processing (DLP) system and gives a cured product having satisfactory rubber physical properties, and a cured product thereof.

SOLUTION TO PROBLEM

Making extensive investigations to attain the above object, the inventors have found that by adding a photopolymerization initiator to an organopolysiloxane having a specific (meth)acryloyloxy-containing group and hydrophobic silica particles having an average particle size within a specific range and a specific hydrophobicity, there is obtained a UV-curable silicone composition which is compatible with stereolithography and gives a cured product having satisfactory rubber physical properties. The invention is predicated on this finding.

Accordingly, the invention is defined as follows.

1. A UV-curable silicone composition for stereolithography comprising:

(A) 100 parts by weight of an organopolysiloxane containing per molecule two groups having the formula (1):

[Chem. 1]

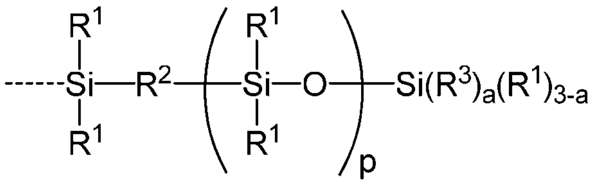

(1)

wherein $R^1$ is each independently a $C_1$-$C_{20}$ monovalent hydrocarbon group, $R^2$ is oxygen or a $C_1$-$C_{20}$ alkylene group, $R^3$ is each independently an acryloyloxyalkyl, methacryloyloxyalkyl, acryloyloxyalkyloxy, methacryloyloxyalkyloxy, (acryloyloxyalkyl)dimethylsilyloxy or (methacryloyloxyalkyl)dimethylsilyloxy group, p is a number satisfying $0 \leq p \leq 10$, and "a" is a number satisfying $1 \leq a \leq 3$, the broken line designates a valence bond,
(B) 10 to 500 parts by weight of hydrophobic silica particles having an average particle size of 10 to 1,000 nm and a hydrophobicity of at least 60% as measured by the methanol titration method, and
(C) 0.01 to 20 parts by weight of a photopolymerization initiator.

2. The UV-curable silicone composition of 1, having a viscosity at 23°C of up to 500 Pa·s.
3. The UV-curable silicone composition of 1 or 2, further comprising (D) 0.01 to 20 parts by weight of a UV absorber having light absorption at wavelength 360 to 410 nm per 100 parts by weight of component (A).
4. The UV-curable silicone composition of any one of 1 to 3, further comprising (E) 0.01 to 20 parts by weight of a colorant per 100 parts by weight of component (A).
5. A cured product of the UV-curable silicone composition of any one of 1 to 4.
6. The cured product of 5 having an elongation at break of at least 150%.

ADVANTAGEOUS EFFECTS OF INVENTION

The UV-curable silicone composition for stereolithography has a viscosity compatible with optical fabrication of the laser system or DLP system. A cured product thereof exhibits satisfactory rubber physical properties.

DESCRIPTION OF EMBODIMENTS

The invention is described in detail.

Ultraviolet-curable silicone composition for stereolithography

The invention provides a UV-curable silicone composition for stereolithography comprising components (A) to (C):

(A) an organopolysiloxane containing two groups having the formula (1) per molecule,
(B) hydrophobic silica particles having an average particle size of 10 to 1,000 nm and a hydrophobicity of at least 60% as measured by the methanol titration method, and
(C) a photopolymerization initiator.

(A) Organopolysiloxane

Component (A) used herein is one of crosslinking components in the composition. It is an organopolysiloxane containing two groups having the formula (1) per molecule and based on a backbone composed essentially of repeating diorganosiloxane units.

[Chem. 2]

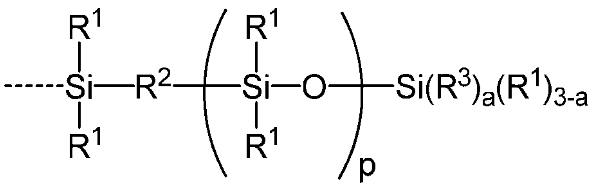

(1)

Herein the broken line designates a valence bond.

In formula (1), $R^1$ is each independently a $C_1$-$C_{20}$ monovalent hydrocarbon group, preferably a $C_1$-$C_{10}$, more preferably $C_1$-$C_8$ monovalent hydrocarbon group exclusive of an aliphatic unsaturated group.

$R^2$ is oxygen or a $C_1$-$C_{20}$ alkylene group, preferably a $C_1$-$C_{10}$, more preferably $C_1$-$C_5$ alkylene group.

$R^3$ is each independently an acryloyloxyalkyl, methacryloyloxyalkyl, acryloyloxyalkyloxy, methacryloyloxyalkyloxy, (acryloyloxyalkyl)dimethylsilyloxy or (methacryloyloxyalkyl)dimethylsilyloxy group.

In formula (1), the $C_1$-$C_{20}$ monovalent hydrocarbon group $R^1$ may be straight, branched or cyclic, and is typically selected from alkyl, alkenyl, aryl and aralkyl groups.

Examples include alkyl groups such as methyl, ethyl, n-propyl, isopropyl, n-butyl, isobutyl, tert-butyl, n-hexyl, cyclohexyl, n-octyl, 2-ethylhexyl and n-decyl; alkenyl groups such as vinyl, allyl or 2-propenyl, 1-propenyl, isopropenyl and butenyl; aryl groups such as phenyl, tolyl, xylyl and naphthyl; and aralkyl groups such as benzyl, phenylethyl and phenylpropyl.

Some or all of the hydrogen atoms bonded to carbon atoms in the monovalent hydrocarbon group may be substituted by halogen atoms such as chlorine, fluorine and bromine, and other substituent groups such as cyano. Examples include halogen-substituted hydrocarbon groups such as chloromethyl, bromoethyl and trifluoropropyl, and cyano-substituted hydrocarbon groups such as cyanoethyl.

Inter alia, $R^1$ is preferably a $C_1$-$C_5$ alkyl group or phenyl, more preferably methyl, ethyl or phenyl.

The $C_1$-$C_{20}$ alkylene group $R^2$ may be straight, branched or cyclic. Examples include methylene, ethylene, propylene, trimethylene, tetramethylene, isobutylene, pentamethylene, hexamethylene, heptamethylene, octamethylene, nonamethylene, and decylene.

Inter alia, $R^2$ is preferably oxygen, methylene, ethylene or trimethylene, more preferably oxygen or ethylene.

The alkyl or alkylene group in the acryloyloxyalkyl, methacryloyloxyalkyl, acryloyloxyalkyloxy, methacryloyloxyalkyloxy, (acryloyloxyalkyl)dimethylsilyloxy, or (methacryloyloxyalkyl)dimethylsilyloxy group, represented by $R^3$, is of 1 to 10 carbon atoms, more preferably 1 to 5 carbon atoms although the carbon count is not particularly limited. Examples of the alkyl group include those exemplified above for $R^1$, but of 1 to 10 carbon atoms.

Illustrative examples of $R^3$ include those shown below, but are not limited thereto.

[Chem. 3]

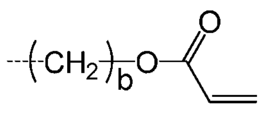
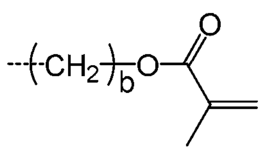
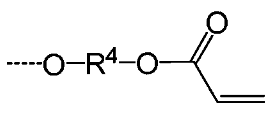
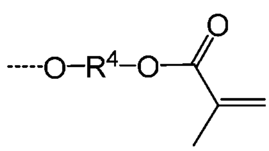

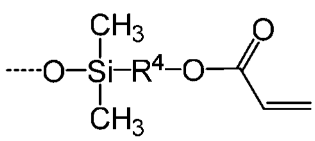
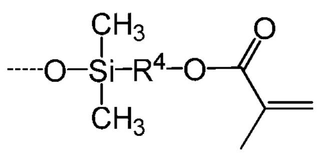

Herein the broken line designates a valence bond.

In the above formulae, b is a number satisfying $1 \leq b \leq 4$, preferably $1 \leq b \leq 3$.

$R^4$ is a $C_1$-$C_{10}$ alkylene group, preferably $C_1$-$C_5$ alkylene group. Examples of $R^4$ include those exemplified above

for $R^2$, but of 1 to 10 carbon atoms. Inter alia, methylene, ethylene and trimethylene are preferred, with methylene and ethylene being more preferred.

In formula (1), p is a number satisfying $0 \leq p \leq 10$, preferably $0 \leq p \leq 5$, more preferably 0 or 1, and "a" is a number satisfying $1 \leq a \leq 3$, more preferably 1 or 2.

The bond position of the group having formula (1) in the organopolysiloxane molecule as component (A) may be either the end (one end or both ends) of the molecular chain or a non-end position (molecular chain midway or side chain) of the molecular chain, or both. In view of flexibility of a cured product, positioning at only the end is desirable.

In the organopolysiloxane molecule as component (A), the silicon-bonded group other than the group having formula (1) is selected, for example, from the groups exemplified above for $R^1$, preferably monovalent hydrocarbon groups of 1 to 12 carbon atoms, more preferably 1 to 10 carbon atoms, exclusive of aliphatic unsaturated groups.

Examples include those groups exemplified above for $R^1$. In view of ease of synthesis, alkyl, aryl and haloalkyl groups are preferred, with methyl, phenyl and trifluoropropyl being more preferred.

The molecular structure of component (A) is basically a straight or branched backbone (including straight backbone having a branch in part) composed of repeating diorganosiloxane units, preferably a straight diorganopolysiloxane blocked at both ends of the molecular chain with the group having formula (1).

Component (A) may be a homopolymer having such a molecular structure, a copolymer composed of such molecular structures, or a mixture of two or more polymers.

The organopolysiloxane as component (A) should preferably have a viscosity at 25°C of 10 to 10,000 mPa·s, more preferably 50 to 5,000 mPa·s when it is taken into account to improve the viscosity of the composition and the dynamic properties of a cured product. In the case of a linear organopolysiloxane, this viscosity range corresponds to a number average degree of polymerization of about 10 to about 550, more preferably about 50 to about 450.

As used herein, the viscosity is measured by a rotational viscometer, for example, BL, BH, BS or cone-plate viscometer or rheometer (the same holds true, hereinafter).

Also, the degree of polymerization or molecular weight can be determined, for example, as a number average degree of polymerization or number average molecular weight versus polystyrene standards by gel permeation chromatography (GPC) using toluene as developing solvent.

Examples of the organopolysiloxane as component (A) include those having the formulae (2) to (5), but are not limited thereto.

[Chem. 4]

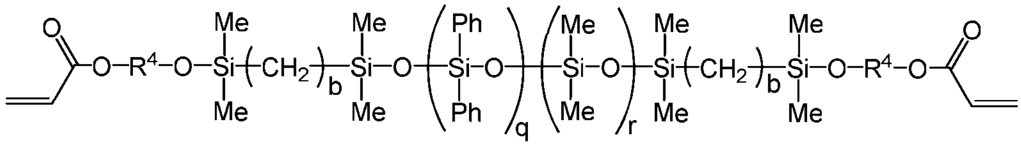

(2)

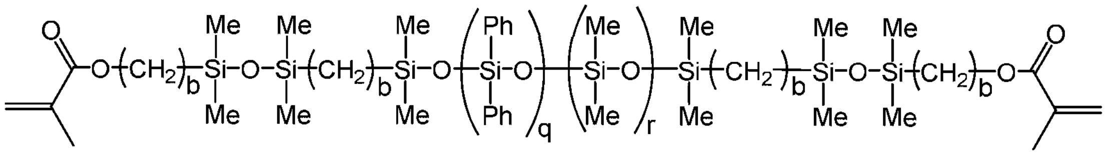

(3)

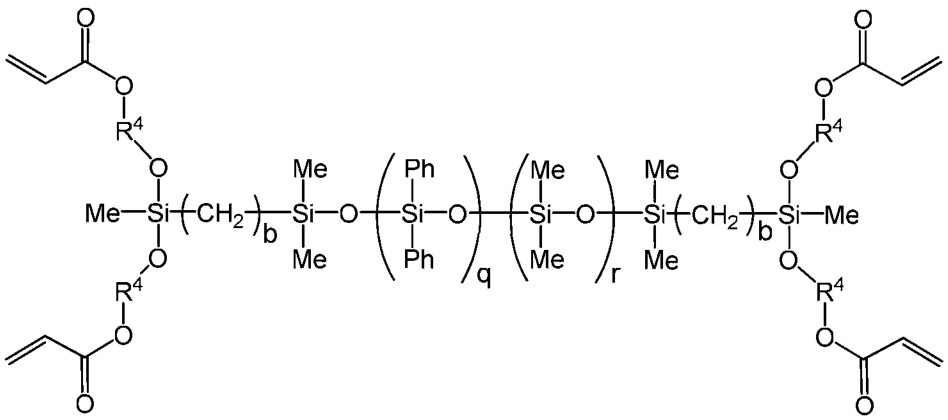

(4)

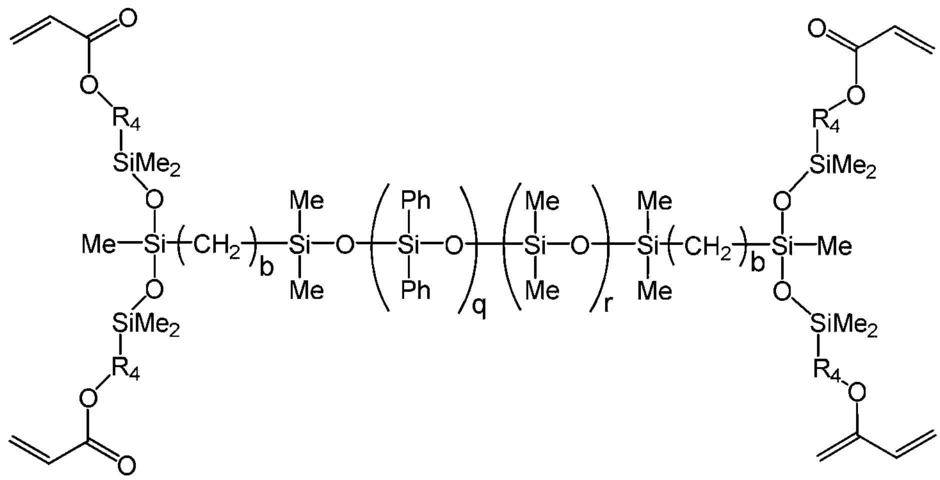

(5)

Herein $R^4$ and b are as defined above, Me stands for methyl, Ph stands for phenyl, q and r are such numbers that the organopolysiloxane may have a viscosity in the above-defined range. Specifically q is preferably a number meeting $1 \leq q \leq 400$, more preferably $1 \leq q \leq 200$, even more preferably $1 \leq q \leq 100$, and r is preferably a number meeting $1 \leq r \leq 400$, more preferably $10 \leq r \leq 300$. The order of arrangement of siloxane units with q and r is arbitrary.

The organopolysiloxane can be prepared by any well-known method. For example, a polysiloxane having formula (2) is obtained by effecting hydrosilation reaction of a both end dimethylvinylsiloxy-capped dimethylsiloxane/-diphenylsiloxane copolymer with chlorodimethylsilane, and reacting the reaction product with 2-hydroxyethyl acrylate.

An organopolysiloxane having formula (3) is obtained by effecting hydrosilation reaction of a both end

dimethylvinylsiloxy-capped dimethylsiloxane/diphenylsiloxane copolymer with 3-(1,1,3,3-tetramethyldisiloxanyl)propyl methacrylate (CAS No. 96474-12-3).

An organopolysiloxane having formula (4) is obtained by effecting hydrosilation reaction of a both end dimethylvinylsiloxy-capped dimethylsiloxane/diphenylsiloxane copolymer with dichloromethylsilane, and reacting the reaction product with 2-hydroxyethyl acrylate.

An organopolysiloxane having formula (5) is obtained by effecting hydrosilation reaction of a both end dimethylvinylsiloxy-capped dimethylsiloxane/diphenylsiloxane copolymer with dichloromethylsilane, and reacting the reaction product with (hydroxydimethylsilyl)methyl acrylate (CAS No. 118536-45-1).

(B) Hydrophobic silica particles

Component (B) is hydrophobic silica particles. When included, component (B) is effective for enhancing the mechanical strength of a cured product while maintaining the composition flowable.

Component (B) should have an average particle size of 10 to 1,000 nm, preferably 20 to 1,000 nm, more preferably 20 to 500 nm, even more preferably 30 to 200 nm. If the average particle size is less than 10 nm, particles are more agglomerative, losing flow. With an average particle size in excess of 1,000 nm, the mechanical strength increasing effect is less. Notably, the average particle size is measured as a median diameter ($D_{50}$) on volume basis in particle size distribution measurement by the laser light diffractometry.

Component (B) should have a hydrophobicity of at least 60%, preferably at least 64%, as measured by the methanol titration method. Silica particles having a high hydrophobicity do not agglomerate even when a composition is heavily loaded therewith so that the mechanical strength of a cured product may be enhanced without detracting from fluidity.

The hydrophobicity is determined by the methanol titration method described below.

(1) A sample is put on a predetermined volume of deionized water. With stirring, methanol is added dropwise.

(2) The volume of methanol added until the sample is entirely suspended in the deionized water is read.

(3) A value of [{volume (mL) of methanol added}/{volume (mL) of methanol added + volume (mL) of deionized water}] $\times$ 100 is the hydrophobicity.

Although the shape of component (B) used herein is not particularly limited, spherical shape is preferred.

The amount of component (B) blended is 10 to 500 parts by weight, preferably 20 to 300 parts by weight, more preferably 30 to 200 parts by weight per 100 parts by weight of component (A). If the amount is less than 10 parts by weight, the effect of improving the mechanical strength of a cured product is weak. If the amount exceeds 500 parts by weight, the composition has too high a viscosity to flow.

Preferred as component (B) are silica particles bearing on their surface $R^7SiO_{3/2}$ units and $R^9{}_3SiO_{1/2}$ units wherein $R^7$ is a $C_1$-$C_{20}$ substituted or unsubstituted monovalent hydrocarbon group and $R^9$ which may be identical or different is a $C_1$-$C_6$ substituted or unsubstituted monovalent hydrocarbon group.

Such component (B) is obtained, for example, by hydrolyzing and condensing a tetrafunctional silane compound, alkyl silicate or a mixture thereof, and introducing on the surface of the resulting hydrophilic silica particles $R^7SiO_{3/2}$ units and then $R^9{}_3SiO_{1/2}$ units through hydrolytic condensation.

[Method for synthesis of component (B)]

Specifically, component (B) is preferably synthesized by the method including the following three steps.

Step ($\alpha$): synthesizing hydrophilic silica particles

Step ($\beta$): subjecting hydrophilic silica particles to hydrophobic surface treatment to form intermediate component (B)

Step ($\gamma$): further subjecting the intermediate component (B) to hydrophobic surface treatment, obtaining hydrophobic silica particles as component (B)

These steps are described in sequence.

• Step (α): Synthesis of hydrophilic silica particles

Step (α) is to hydrolyze and condense either one or both of a tetrafunctional silane compound having the general formula (I) and an alkyl silicate having the general formula (II) in the presence of a basic substance in a mixture of a hydrophilic organic solvent and water, obtaining a dispersion of hydrophilic silica particles.

$$Si(OR^5)_4 \qquad (I)$$

[Chem. 5]

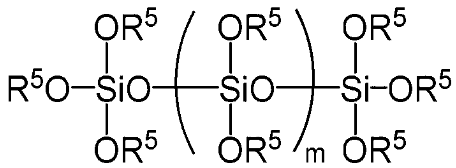

(II)

Herein $R^5$ which may be identical or different is a $C_1$-$C_6$ monovalent hydrocarbon group, and m is a number of 1 to 100.

In formulae (I) and (II), $R^5$ which may be identical or different is a monovalent hydrocarbon group of 1 to 6 carbon atoms, preferably 1 to 4 carbon atoms, more preferably 1 or 2 carbon atoms.

The monovalent hydrocarbon group $R^5$ may be straight, branched or cyclic. Examples thereof include alkyl groups such as methyl, ethyl, n-propyl, isopropyl and n-butyl, and aryl groups such as phenyl. Of these, $R^5$ is preferably methyl, ethyl, n-propyl or n-butyl, more preferably methyl or ethyl.

In formula (II), m is a number of 1 to 100, preferably 1 to 50, more preferably 1 to 25.

Examples of the tetrafunctional silane compound having formula (I) include tetraalkoxysilanes such as tetramethoxysilane, tetraethoxysilane, tetrapropoxysilane and tetrabutoxysilane; and tetraaryloxysilanes such as tetraphenoxysilane. Inter alia, tetramethoxysilane, tetraethoxysilane, tetrapropoxysilane and tetrabutoxysilane are preferred, with tetramethoxysilane and tetraethoxysilane being more preferred.

Examples of the alkyl silicate having formula (II) include methyl silicate and ethyl silicate, with methyl silicate being preferred.

They may be used alone or in admixture of two or more.

The hydrophilic organic solvent used in step (α) is not particularly limited as long as the tetrafunctional silane compound having formula (I), the alkyl silicate having formula (II) and water are soluble therein. Examples thereof include alcohols; cellosolves such as methyl cellosolve, ethyl cellosolve, butyl cellosolve and cellosolve acetate; ketones such as acetone and methyl ethyl ketone; and ethers such as dioxane and tetrahydrofuran. Inter alia, alcohols and cellosolves are preferred, with alcohols being more preferred.

Typical of the alcohol are alcohols having the general formula (VI):

$$R^6OH \qquad (VI)$$

wherein $R^6$ is a $C_1$-$C_6$ monovalent hydrocarbon group.

In formula (VI), $R^6$ is a monovalent hydrocarbon group of 1 to 6 carbon atoms, preferably 1 to 4 carbon atoms, more preferably 1 or 2 carbon atoms. Examples of the monovalent hydrocarbon group $R^6$ are as exemplified above for $R^5$. Inter alia, $R^6$ is preferably methyl, ethyl, n-propyl or isopropyl, more preferably methyl or ethyl.

Examples of the alcohol having formula (VI) include methanol, ethanol, propanol, isopropanol and butanol, with methanol and ethanol being preferred. As the carbon count of an alcohol increases, the resulting silica particles have a larger particle size. Accordingly, methanol is preferred for obtaining the desired silica particles having a smaller particle size.

The amount of water used in the hydrolytic condensation is preferably 0.5 to 5 moles, more preferably 0.6 to 2 moles, even more preferably 0.7 to 1 mole per mole of the total of the tetrafunctional silane compound having formula (I) and/or the alkyl silicate having formula (II). The ratio of the hydrophilic organic solvent and water is preferably such that 10 to 200 parts by weight of the hydrophilic organic solvent is present per 100 parts by weight of water.

Examples of the basic substance used in step (α) include ammonia, dimethylamine and diethylamine. Inter alia, ammonia and diethylamine are preferred, with ammonia being more preferred. The predetermined amount of the basic

substance is dissolved in water to form an aqueous (basic) solution, which is mixed with the hydrophilic organic solvent.

The amount of the basic substance used is preferably 0.01 to 2 moles, more preferably 0.02 to 0.5 mole, even more preferably 0.04 to 0.12 mole per mole of the total of the tetrafunctional silane compound having formula (I) and/or the alkyl silicate having formula (II). As the amount of the basic substance is smaller, the desired silica particles having a smaller particle size are obtained.

In one procedure, after the basic substance is added to a mixture of the hydrophilic organic solvent and water, the basic substance is added to the mixture along with the tetrafunctional silane compound having formula (I) and/or the alkyl silicate having formula (II). In another procedure, the basic substance is added to a mixture of the hydrophilic organic solvent and water simultaneously with the tetrafunctional silane compound and/or the alkyl silicate and the hydrophilic organic solvent.

The reaction conditions of step ($\alpha$) are not particularly limited. Step ($\alpha$) may be carried out under prior art well-known conditions, for example, preferably at about 10 to 80°C for about 1 to 10 hours.

The resulting dispersion of hydrophilic silica particles in the solvent mixture may be directly used in step ($\beta$). The preferred procedure involves adding water to the dispersion of hydrophilic silica particles in the solvent mixture, distilling off the hydrophilic organic solvent to convert the dispersion to an aqueous dispersion whereby the remaining alkoxy groups are hydrolyzed, that is, converting the dispersion to an aqueous dispersion of hydrophilic silica particles.

The dispersing medium of the dispersion of silica particles in the solvent mixture can be changed to water, for example, by the steps of adding water to the dispersion and distilling off the hydrophilic organic solvent (repeating the steps if necessary). The amount of water added herein is preferably 50 to 200 parts by weight, more preferably 80 to 150 parts by weight per 100 parts by weight of the total of the hydrophilic organic solvent used and the alcohol created in the hydrophilic silica particle synthesizing step.

• Step ($\beta$): Surface treatment of hydrophilic silica particles

Step ($\beta$) involves adding either one or both of a trifunctional silane compound having the general formula (III) and a (partial) hydrolytic condensate thereof to the dispersion of hydrophilic silica particles in the solvent mixture resulting from step ($\alpha$), and treating the surface of the hydrophilic silica particles, obtaining a dispersion of silica particles (intermediate hydrophobic silica particles) which is intermediate component (B).

$$R^7Si(OR^8)_3 \qquad (III)$$

Herein $R^7$ is a $C_1$-$C_{20}$ substituted or unsubstituted monovalent hydrocarbon group and $R^8$ which may be identical or different is a $C_1$-$C_6$ monovalent hydrocarbon group.

In formula (III), $R^7$ is a substituted or unsubstituted monovalent hydrocarbon group of 1 to 20 carbon atoms, preferably 1 to 10 carbon atoms, more preferably 1 to 3 carbon atoms, even more preferably 1 or 2 carbon atoms. The monovalent hydrocarbon group $R^7$ may be straight, branched or cyclic. Examples thereof include alkyl groups such as methyl, ethyl, n-propyl, isopropyl, n-butyl, n-hexyl and n-decyl. Of these, $R^7$ is preferably methyl, ethyl, n-propyl or isopropyl, more preferably methyl or ethyl. In the monovalent hydrocarbon group, some or all of the hydrogen atoms may be substituted by halogen such as fluorine, chlorine and bromine. Fluorinated alkyl groups are preferred.

In formula (III), $R^8$ which may be identical or different is a monovalent hydrocarbon group of 1 to 6 carbon atoms, preferably 1 to 3 carbon atoms, more preferably 1 or 2 carbon atoms. Examples of the group $R^8$ are as exemplified above for $R^5$. Inter alia, $R^8$ is preferably methyl, ethyl or n-propyl, more preferably methyl or ethyl.

Examples of the trifunctional silane compound having formula (III) include unsubstituted or halo-substituted trialkoxysilanes such as methyltrimethoxysilane, methyltriethoxysilane, ethyltrimethoxysilane, ethyltriethoxysilane, n-propyltrimethoxysilane, n-propyltriethoxysilane, isopropyltrimethoxysilane, isopropyltriethoxysilane, butyltrimethoxysilane, butyltriethoxysilane, hexyltrimethoxysilane, trifluoropropyltrimethoxysilane, and heptadecafluorodecyltrimethoxysilane. Inter alia, methyltrimethoxysilane, methyltriethoxysilane, ethyltrimethoxysilane and ethyltriethoxysilane are preferred, with methyltrimethoxysilane and methyltriethoxysilane being more preferred.

The amount of the trifunctional silane compound having formula (III) added is preferably 0.001 to 1 mole, more preferably 0.01 to 0.4 mole, even more preferably 0.01 to 0.2 mole per mole of Si atoms in the hydrophilic silica particles resulting from step ($\alpha$). When the addition amount is at least 0.001 mole, the resulting component (B) has a higher hydrophobicity and better dispersibility. When the addition amount is up to 1 mole, the risk of component (B) agglomerating together is minimized.

Although the treating conditions of step ($\beta$) are not particularly limited, the preferred conditions are about 10 to 80°C for about 1 to 10 hours.

• Step (y): Surface treatment of intermediate component (B)

Step (γ) involves changing the dispersing medium of the dispersion of silica particles in solvent mixture resulting from step (β) as intermediate component (B) to another solvent, typically ketone solvent, to form a dispersion of intermediate hydrophobic silica particles in ketone solvent, and adding either one or both of a silazane compound having the general formula (IV) and a monofunctional silane compound having the general formula (V) to the ketone solvent dispersion, to treat the surface of silica particles as intermediate component (B), thus obtaining hydrophobic silica particles as component (B). Through this step, silanol groups remaining on the surface of intermediate hydrophobic silica particles are converted to triorganosilyl, whereby $R^9{}_3SiO_{1/2}$ units are introduced into the surface.

$$R^9{}_3SiNHSiR^9{}_3 \qquad (IV)$$

$$R^9{}_3SiX \qquad (V)$$

Herein $R^9$ which may be identical or different is a $C_1$-$C_6$ substituted or unsubstituted monovalent hydrocarbon group, and X is OH or a hydrolyzable group.

In formulae (IV) and (V), $R^9$ which may be identical or different is a substituted or unsubstituted monovalent hydrocarbon group of 1 to 6 carbon atoms, preferably 1 to 4 carbon atoms, more preferably 1 or 2 carbon atoms. Examples of the group $R^9$ are as exemplified above for $R^5$. Inter alia, $R^9$ is preferably methyl, ethyl or n-propyl, more preferably methyl or ethyl. In the monovalent hydrocarbon group, some or all of the hydrogen atoms may be substituted by halogen atoms such as fluorine, chlorine and bromine. Fluorine-substituted alkyl groups being preferred.

X is OH or a hydrolyzable group. Examples of the hydrolyzable group include chlorine; alkoxy groups such as methoxy and ethoxy; amino, N-methylamino, N,N'-dimethylamino, N-ethylamino, and N,N'-diethylamino; and acyloxy groups such as acetoxy. Inter alia, alkoxy and amino groups are preferred. The alkoxy groups are more preferred, with methoxy and ethoxy being most preferred.

Examples of the silazane compound having formula (IV) include hexamethyldisilazane, hexaethyldisilazane, and tetramethyldivinyldisilazane, with hexamethyldisilazane being preferred.

Examples of the monofunctional silane compound having formula (V) include monosilanol compounds such as trimethylsilanol and triethylsilanol; monochlorosilanes such as trimethylchlorosilane and triethylchlorosilane; monoalkoxysilanes such as trimethylmethoxysilane and trimethylethoxysilane; monoaminosilanes such as trimethylsilyldimethylamine and trimethylsilyldiethylamine; and monoacyloxysilanes such as trimethylacetoxysilane. Inter alia, trimethylsilanol, trimethylmethoxysilane and trimethylsilyldiethylamine are preferred, with trimethylsilanol and trimethylmethoxysilane being more preferred.

These compounds may be used alone or in admixture of two or more.

The amount of the silazane compound having formula (IV) and/or the monofunctional silane compound having formula (V) used is preferably 0.1 to 0.5 mole, more preferably 0.2 to 0.4 mole, even more preferably 0.25 to 0.35 mole per mole of Si atoms in the intermediate hydrophobic silica particles resulting from step (β). When the amount is at least 0.1 mole, the resulting hydrophobic silica particles have a higher hydrophobicity and better dispersibility. When the cost and other factors are taken into account, an amount of up to 0.5 mole is sufficient.

The dispersing medium in the dispersion of the intermediate hydrophobic silica particles in the solvent mixture resulting from step (β) can be changed from the solvent mixture of water or hydrophilic organic solvent and the alcohol resulting from hydrolysis to a ketone solvent by adding the ketone solvent to the dispersion of the intermediate hydrophobic silica particles in the solvent mixture and distilling off the mixture of water or hydrophilic organic solvent and the alcohol (repeating the steps if necessary). The preferred conditions in this step include about 10 to 150°C for about 1 to 20 hours.

The amount of the ketone solvent added is preferably 50 to 500 parts by weight, more preferably 100 to 300 parts by weight per 100 parts by weight of the intermediate hydrophobic silica particles. Examples of the ketone solvent include methyl ethyl ketone, methyl butyl ketone and acetylacetone, with methyl isobutyl ketone being preferred.

Although the surface treatment conditions in step (γ) are not particularly limited, the preferred conditions are at about 10 to 150°C for about 1 to 20 hours.

Component (B) prepared as above is obtained as powder by conventional means such as drying under normal pressure at room temperature or elevated temperature or vacuum drying.

(C) Photopolymerization initiator

Component (C) is a photopolymerization initiator. Examples of the photopolymerization initiator which can be used herein include 2,2-diethoxyacetophenone, 2,2-dimethoxy-1,2-diphenylethan-1-one (Omnirad 651), 1-hydroxycyclohexyl phenyl ketone (Omnirad 184), 2-hydroxy-2-methyl-1-phenyl-propan-1-one (Omnirad 1173), 2-hydroxy-1-{4-[4-(2-hydroxy-2-methyl-propionyl)benzyl]phenyl}-2-methyl-propan-1-one (Omnirad 127), phenyl glyoxylic acid

methyl ester (Omnirad MBF), 2-methyl-1-[4-(methylthio)phenyl]-2-morpholinopropan-1-one (Omnirad 907), 2-benzyl-2-dimethylamino-1-(4-morpholinophenyl)-1-butanone (Omnirad 369), bis(2,4,6-trimethylbenzoyl)-phenylphosphine oxide (Omnirad 819), 2,4,6-trimethylbenzoyl-diphenyl-phosphine oxide (Omnirad TPO), and ethyl phenyl(2,4,6-trimethylbenzoyl)phosphinate (Omnirad TPO-L), all available from IGM Resins B.V. These compounds may be used alone or in admixture of two or more.

Of these, preference is given in view of the compatibility with components (A) and (B) to 2,2-diethoxyacetophenone, 2-hydroxy-2-methyl-1-phenyl-propan-1-one (Omnirad 1173), bis(2,4,6-trimethylbenzoyl)-phenylphosphine oxide (Omnirad 819), 2,4,6-trimethylbenzoyl-diphenyl-phosphine oxide (Omnirad TPO H), and ethyl phenyl(2,4,6-trimethylbenzoyl)phosphinate (Omnirad TPO-L).

The amount of the photopolymerization initiator added is 0.01 to 20 parts by weight, preferably 0.1 to 10 parts by weight per 100 parts by weight of component (A). Less than 0.01 part by weight leads to shortage of cure whereas more than 20 parts by weight adversely affects deep-section cure.

(D) UV absorber having light absorption at 360 to 410 nm

To the composition of the invention, a UV absorber having light absorption at wavelength 360 to 410 nm may be added in order to tailor the curability during optical fabrication on 3D printers.

Examples of the UV absorber which can be used herein include 2-(2H-benzotriazol-2-yl)-6-dodecyl-4-methylphenol (Tinuvin 571, BASF), benzenepropanoic acid 3-(2H-benzotriazol-2-yl)-5-(1,1-dimethylethyl)-4-hydroxy C7-C9 branched or straight alkyl ester (Tinuvin 384-2, BASF), 2-(5-chloro-2-benzotriazolyl)-6-tert-butyl-p-cresol (Tinuvin 326, BASF), the reaction product of 2-(4,6-bis(2,4-dimethylphenyl)-1,3,5-triazin-2-yl)-5-hydroxyphenyl with [(C10-C16, mainly C12-C13 alkyloxy)methyl]oxirane (Tinuvin 400, BASF), thioxanthone, 2-isopropylthioxanthone, 2,4-diethylthioxanthone, benzophenone, camphorquinone, 1-phenyl-1,2-propanedione, diethylaminohydroxybenzoyl hexyl benzoate (Uvinul A Plus, BASF), 1-(4-tert-butylphenyl)-3-(4-methoxyphenyl)-1,3-propanedione, and 2-ethylhexyl 4-methoxycinnamate. These compounds may be used alone or in admixture of two or more.

When used, the amount of the UV absorber added is preferably 0.01 to 20 parts by weight, more preferably 0.1 to 10 parts by weight per 100 parts by weight of component (A). Less than 0.01 part by weight of the UV absorber sometimes fails to exert its effect whereas more than 20 parts by weight sometimes adversely affects deep-section cure.

(E) Colorant

To the composition, any of various colorants may be added for the purpose of tailoring the curability of the composition or coloring the composition.

The colorant may be selected from conventional pigments such as iron oxide, titanium oxide and zinc oxide, dyes, and carbon black. They may be used alone or in admixture of two or more.

When used, the amount of the colorant added is preferably 0.01 to 20 parts by weight per 100 parts by weight of component (A). Less than 0.01 part by weight of the colorant sometimes fails to exert its effect whereas more than 20 parts by weight sometimes adversely affects deep-section cure.

It is noted that additives including silane coupling agents, adhesion aids, polymerization inhibitors, antioxidants, UV absorbers serving as light resistant stabilizers, and photo-stabilizers may be added to the inventive composition as long as the benefits of the invention are not lost.

Also, the inventive composition may be used in admixture with another resin composition.

[2] Method of preparing silicone composition

The method of preparing the inventive silicone composition is not particularly limited and any of prior art well-known methods may be used. Specifically, the inventive silicone composition is obtained by mixing components (A) to (C) and other components if necessary.

The method of preparing the inventive silicone composition preferably involves the following steps (1) and (2):

step (1): preparing component (B) by the method comprising steps (α), (β) and (y), and

step (2): mixing components (A) to (C) and other components if necessary.

• Step (1): Preparing component (B)

Step (1) is to prepare component (B) by the method comprising steps (α), (β) and (γ).

Step (α) is to hydrolyze and condense either one or both of a tetrafunctional silane compound having the general

formula (I) and an alkyl silicate having the general formula (II) in the presence of a basic substance in a mixture of a hydrophilic organic solvent and water, obtaining a dispersion of hydrophilic silica particles.

$Si(OR^5)_4$ (I)

[Chem. 6]

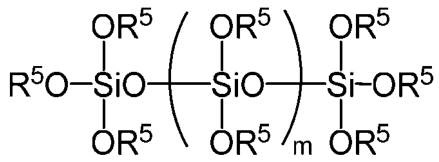

(II)

Herein $R^5$ and m are as defined above.

Step (β) involves adding either one or both of a trifunctional silane compound having the general formula (III) and a (partial) hydrolytic condensate thereof to the dispersion of hydrophilic silica particles in the solvent mixture resulting from step (α), and treating the surface of the hydrophilic silica particles, obtaining a dispersion of silica particles which is intermediate component (B).

$R^7Si(OR^8)_3$ (III)

Herein $R^7$ and $R^8$ are as defined above.

Step (γ) involves adding either one or both of a silazane compound having the general formula (IV) and a monofunctional silane compound having the general formula (V) to the dispersion of silica particles resulting from step (β) as intermediate component (B), treating the surface of silica particles as intermediate component (B), thus obtaining hydrophobic silica particles as component (B).

$R^9{}_3SiNHSiR^9{}_3$ (IV)

$R^9{}_3SiX$ (V)

Herein $R^9$ and X are as defined above.

The method of preparing component (B) is as described above.

• Step (2): Mixing components (A) to (C)

The step of mixing components (A) to (C) is not particularly limited. The UV-curable silicone composition for stereolithography can be obtained by mixing components (A) to (C) and other components, if necessary, in any desired order and stirring them. The equipment used in stirring and similar operations is not particularly limited, and a mortar, three-roll mill, ball mill or planetary mixer may be used. These machines may be used in combination.

The inventive silicone composition may be of either one- or two-part type. The composition of one-part type may be obtained, for example, by admitting components (A) to (C) and other components, if necessary, to a gate mixer (trade name: planetary mixer by Inoue Mfg. Co., Ltd.). Alternatively, the composition may be obtained by admitting components (A) and (B) to a gate mixer, mixing at room temperature under reduced pressure for 1 hour, cooling the mixture, adding component (C) to the mixture, and mixing at room temperature for 30 minutes.

For optical fabrication, the UV-curable silicone composition should preferably have a viscosity at 23°C of up to 500 Pa·s, more preferably up to 400 Pa·s, even more preferably up to 100 Pa·s. A viscosity in excess of 500 Pa·s may lead to inefficient optical fabrication, failing to form a body of desired shape accurately. Although the lower limit is not critical, a viscosity of at least 1 Pa·s is preferred, with at least 2 Pa·s being more preferred.

[3] Cured product

The UV-curable silicone composition for stereolithography can be quickly cured by irradiating UV.

Examples of the light source for irradiating UV include UV-LED lamps, high-pressure mercury lamps, ultra high-pressure mercury lamps, metal halide lamps, carbon arc lamps and xenon lamps.

Preferably, UV is irradiated, for example, approximately at room temperature (25°C) in an inert gas atmosphere such as nitrogen or argon.

When the composition is cured solely with UV irradiation, the dose (accumulative light quantity) of UV is preferably 1 to 10,000 $mJ/cm^2$, more preferably 10 to 8,000 $mJ/cm^2$ relative to a sheet of about 2.0 mm thick shaped from the composition. That is, when UV having an illuminance of 100 $mW/cm^2$ is used, UV may be irradiated for about 0.01 to 100 seconds.

The cured product of the UV-curable silicone composition for stereolithography should preferably have a tensile strength of at least 2.0 MPa, more preferably at least 3.0 MPa in order that the cured product exhibit improved rubber physical properties. The cured product should preferably have an elongation at break of at least 150%, more preferably at least 200%. These values are measured according to JIS K6249.

EXAMPLES

Synthesis Examples, Comparative Synthesis Examples, Examples, and Comparative Examples are given below for further illustrating the invention although the invention is not limited thereto.

The compounds used in Examples are shown below. In the formulae, Me stands for methyl and Ph for phenyl.

[1] Components for blending

Component (A)

[Chem. 7]

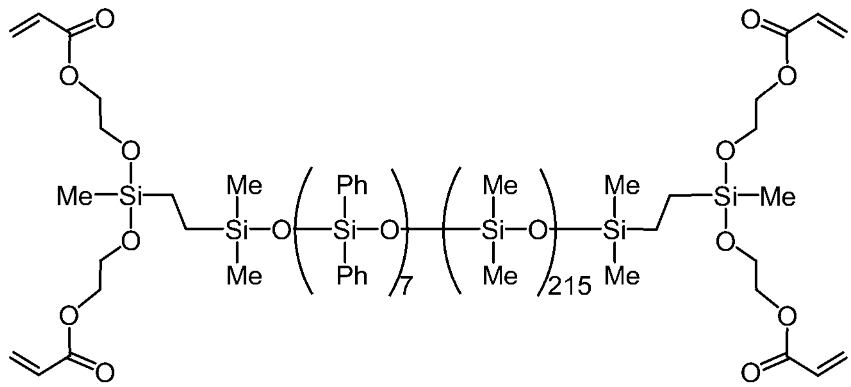

(A-1)

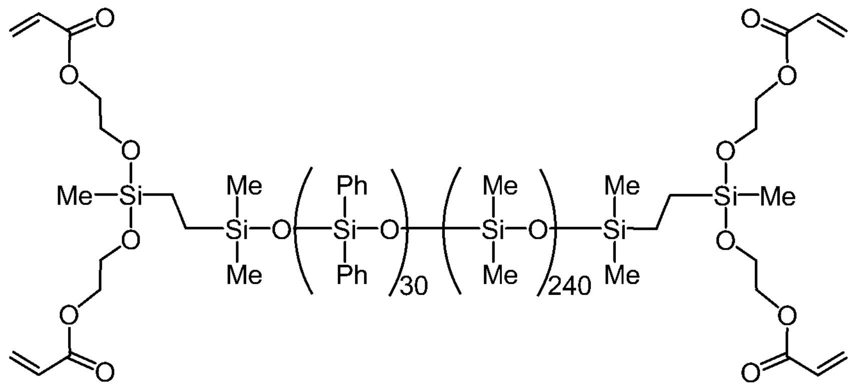

(A-2)

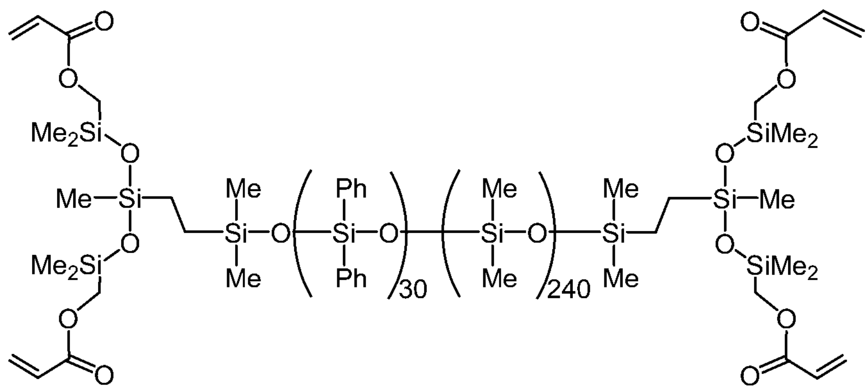

(A-3)

The arrangement order of the siloxane units within parentheses is arbitrary.

Component (B)

(B-1) hydrophobic silica particles obtained in Synthesis Example 1
(B-2) hydrophobic silica particles obtained in Synthesis Example 2
(B-3) hydrophobic silica particles obtained in Synthesis Example 3
(cB-1) hydrophobic silica particles obtained in Comparative Synthesis Example 1

Component (C)

(C-1) 2-hydroxy-2-methyl-1-phenyl-propan-1-one (Omnirad 1173, IGM Resins B.V.)
(C-2) ethyl phenyl(2,4,6-trimethylbenzoyl)phosphinate (Omnirad TPO-L, IGM Resins B.V.)

[2] Synthesis of hydrophobic silica microparticles

[Synthesis Example 1]

• Step (α): Synthesis of hydrophilic silica particles

A 3-L glass reactor equipped with a stirrer, dropping funnel and thermometer was charged with 623.7 g of methanol, 41.4 g of water, and 49.8 g of 28 wt% aqueous ammonia, which were mixed. The solution was conditioned at 35°C, with stirring, 1163.7 g of tetramethoxysilane and 418.4 g of 5.4 wt% aqueous ammonia were added dropwise over 5 hours after simultaneous start. At the end of addition, stirring was continued for a further 0.5 hour to carry out hydrolysis, obtaining a suspension of hydrophilic spherical silica particles. An ester adaptor and cooling tube were coupled to the glass reactor, which was heated at 60-70°C to distill off 649 g of methanol. Water, 1,600 g, was added to the reactor, which was heated at 70-90°C to distill off 160 g of methanol, obtaining an aqueous suspension of hydrophilic silica particles.

• Step (β): Surface treatment of hydrophilic silica particles

To the aqueous suspension at 25°C, 115.8 g (0.1 equivalent relative to $SiO_2$) of methyltrimethoxysilane and 46.6 g of 5.4 wt% aqueous ammonia were added dropwise over 0.5 hour. At the end of addition, the reactor was heated at 50°C, followed by aging for 1 hour. After the completion of reaction, the reactor was cooled at 25°C. With the surface treatment of hydrophilic silica particles in this way, there was obtained a dispersion of intermediate hydrophobic silica particles as intermediate component (B).

• Step (y): Surface treatment of intermediate component (B)

To the dispersion, 1,000 g of methyl isobutyl ketone was added. With the liquid interface kept vigorously fluctuated, the dispersion was heated at 80-115°C over 11 hours to distill off 1,336 g of a mixture of methanol and water. To the resulting dispersion at 25°C, 357.4 g of hexamethyldisilazane was added. The dispersion was heated at 120°C for 3 hours to carry out trimethylsilation reaction of silica particles, obtaining hydrophobic silica particles. Thereafter, the dispersion was heated on an evaporator to evaporate off the solvent, obtaining 477 g of hydrophobic silica particles (B-1).

[Synthesis Example 2]

By the same procedure as Synthesis Example 1 aside from using 901.9 g of methyl silicate (Methyl Silicate 51 by Colcoat Co., Ltd.) instead of 1163.7 g of tetramethoxysilane in step (α), there was obtained 470 g of hydrophobic silica particles (B-2).

[Synthesis Example 3]

By the same procedure as Synthesis Example 1 aside from changing the amount of methyltrimethoxysilane in step (β) to 11.6 g (0.01 equivalent relative to $SiO_2$), there was obtained 360 g of hydrophobic silica particles (B-3).

[Comparative Synthesis Example 1]

A 3-L glass reactor equipped with a stirrer, dropping funnel and thermometer was charged with 60 g of isopropanol and 100 g of Snowtex® OL (colloidal silica by Nissan Chemical Corp., average particle size 50 nm, dispersed in water in a solid concentration of 20 wt%) as silica particles, which were mixed. To the solution, 0.48 g of methyltrimethoxysilane was added dropwise over 0.5 hour. At the end of addition, the solution was heated at 50°C and aged for 1 hour. After the completion of reaction, the solution was cooled at 25°C, completing the surface treatment of silica particles.

Subsequently, 0.78 g of hexamethyldisilazane was added to the dispersion, which was heated for reaction at 105°C for 2 hours. Finally, 2.6 parts by weight of 35 wt% hydrochloric acid aqueous solution was added, allowing silica particles to settle down. Then the solvent was evaporated off on an evaporator, obtaining hydrophobic silica particles

(cB-1).

[Measurement methods]

The hydrophobic silica particles obtained above were analyzed by the following measurement methods 1 and 2. The results are shown in Table 1.

1. Measurement of average particle size of hydrophobic silica particles

(1) A glass bottle was charged with 0.1 g of a sample, 20 g of methanol was added, and the contents were stirred.
(2) The contents were dispersed on a ultrasonic dispersing unit for 10 minutes, obtaining a measuring specimen.
(3) The specimen of (2) was analyzed by a laser light scattering particle size distribution measuring system (Nanotrac 150, Nikkiso Co., Ltd.). The average particle size is given by a volume basis median diameter (particle size corresponding to 50% accumulation when particle size distribution is expressed as cumulative distribution).

2. Measurement of hydrophobicity of hydrophobic silica particles

(1) 0.2 mg of a sample was metered into a 500-ml triangular flask.
(2) 50 ml of deionized water was added to (1), which were stirred by a stirrer.
(3) With stirring, methanol was added dropwise through a burette. The amount of methanol added until the sample was entirely suspended in deionized water was read.
(4) A hydrophobicity was computed according to the following formula.

Hydrophobicity (%) = [{volume (mL) of methanol added}/ {volume (mL) of methanol added + volume (mL) of deionized water}] $\times$ 100

[Table 1]

| | Synthesis Example 1 | Synthesis Example 2 | Synthesis Example 3 | Comparative Synthesis Example 1 |
|---|---|---|---|---|
| Hydrophobic silica particles | B-1 | B-2 | B-3 | cB-1 |
| Average particle size (nm) | 87 | 82 | 113 | 50 |
| Hydrophobicity | 67 | 67 | 66 | 58 |

[3] Preparation and evaluation of silicone compositions and preparation and evaluation of cured products

[Examples 1 to 7 and Comparative Example 1]

Each of silicone compositions shown in Table 2 was prepared by mixing components (A) to (C) according to the formulation shown in Table 2. The viscosity of the composition in Table 2 is measured at 23°C by a rotational viscometer.

The silicone composition prepared above was cured on a UV curing system (CCS Inc.) under nitrogen atmosphere at room temperature (25°C) by irradiating UV of wavelength 405 nm in a dose of 8,000 mJ/$cm^2$. The sheet of the composition had a thickness of 2.0 mm. The hardness, elongation at break and tensile strength of the cured product were measured according to JIS K 6249: 2003.

[Table 2]

| | | Example | | | | | | | Comp. Example |
|---|---|---|---|---|---|---|---|---|---|
| | | 1 | 2 | 3 | 4 | 5 | 6 | 7 | 1 |
| Formulation (pbw) | A-1 | 100 | 100 | 100 | 100 | 0 | 0 | 0 | 100 |
| | A-2 | 0 | 0 | 0 | 0 | 100 | 100 | 0 | 0 |
| | A-3 | 0 | 0 | 0 | 0 | 0 | 0 | 100 | 0 |
| | B-1 | 100 | 0 | 0 | 0 | 0 | 0 | 0 | 0 |
| | B-2 | 0 | 100 | 150 | 0 | 100 | 100 | 100 | 0 |
| | B-3 | 0 | 0 | 0 | 100 | 0 | 0 | 0 | 0 |
| | cB-1 | 0 | 0 | 0 | 0 | 0 | 0 | 0 | 150 |
| | C-1 | 0.5 | 0.5 | 0.5 | 0.5 | 0.5 | 0 | 0 | 0.5 |
| | C-2 | 0.5 | 0.5 | 0.5 | 0.5 | 0.5 | 0.5 | 0.5 | 0.5 |
| Physical properties of composition | Outer appearance | transparent, pale yellow | transparent, pale yellow | transparent, pale yellow | pale yellow | transparent, pale yellow | transparent, pale yellow | pale yellow | white turbid |
| | Viscosity (Pa·s) | 10 | 14 | 43 | 23 | 40 | 33 | 66 | unmeasurable |
| Physical properties of cured product | Hardness (Durometer Type A) | 30 | 30 | 44 | 36 | 35 | 35 | 28 | uncured |
| | Tensile strength (MPa) | 3.0 | 3.9 | 4.8 | 2.1 | 1.9 | 3.8 | 2.9 | uncured |
| | Elongation at break (%) | 400 | 460 | 320 | 230 | 210 | 300 | 300 | uncured |

As seen from Table 1, the UV curable silicone compositions prepared in Examples 1 to 7 have a low viscosity compatible with the optical fabrication. Their cured products have satisfactory dynamic properties.

## Claims

1. A UV-curable silicone composition for stereolithography comprising:

(A) 100 parts by weight of an organopolysiloxane containing per molecule two groups having the formula (1):

[Chem. 1]

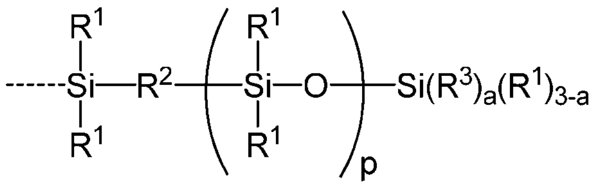

(1)

wherein $R^1$ is each independently a $C_1$-$C_{20}$ monovalent hydrocarbon group, $R^2$ is oxygen or a $C_1$-$C_{20}$ alkylene group, $R^3$ is each independently an acryloyloxyalkyl, methacryloyloxyalkyl, acryloyloxyalkyloxy, methacryloyloxyalkyloxy, (acryloyloxyalkyl)dimethylsilyloxy or (methacryloyloxyalkyl)dimethylsilyloxy group, p is a number satisfying $0 \leq p \leq 10$, and "a" is a number satisfying $1 \leq a \leq 3$, the broken line designates a valence bond,
(B) 10 to 500 parts by weight of hydrophobic silica particles having an average particle size of 10 to 1,000 nm and a hydrophobicity of at least 60% as measured by the methanol titration method, and
(C) 0.01 to 20 parts by weight of a photopolymerization initiator.

2. The UV-curable silicone composition of claim 1, having a viscosity at 23°C of up to 500 Pa·s.

3. The UV-curable silicone composition of claim 1 or 2, further comprising (D) 0.01 to 20 parts by weight of a UV absorber having light absorption at wavelength 360 to 410 nm per 100 parts by weight of component (A).

4. The UV-curable silicone composition of any one of claims 1 to 3, further comprising (E) 0.01 to 20 parts by weight of a colorant per 100 parts by weight of component (A).

5. A cured product of the UV-curable silicone composition of any one of claims 1 to 4.

6. The cured product of claim 5 having an elongation at break of at least 150%.

## INTERNATIONAL SEARCH REPORT

International application No.
**PCT/JP2024/043176**

**A. CLASSIFICATION OF SUBJECT MATTER**

***C08F 299/08***(2006.01)i; ***C08F 2/44***(2006.01)i
FI: C08F299/08; C08F2/44 B

According to International Patent Classification (IPC) or to both national classification and IPC

**B. FIELDS SEARCHED**

Minimum documentation searched (classification system followed by classification symbols)

C08F299/08; C08F2/44

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2022-167391 A (SHIN-ETSU CHEMICAL CO., LTD.) 04 November 2022 (2022-11-04) entire text | 1-6 |
| A | JP 2023-519093 A (CABOT CORPORATION) 10 May 2023 (2023-05-10) entire text | 1-6 |
| A | JP 2019-001975 A (SHIN-ETSU CHEMICAL CO., LTD.) 10 January 2019 (2019-01-10) entire text | 1-6 |
| A | WO 2022/240961 A1 (ELKEM SILICONES USA CORP.) 17 November 2022 (2022-11-17) entire text | 1-6 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 February 2025** | **25 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/043176**

| Patent document cited in search report | Publication date (day/month/year) | Patent family member(s) | Publication date (day/month/year) |
|---|---|---|---|
| JP 2022-167391 A | 04 November 2022 | US 2024/0199815 A1<br>entire text<br>WO 2022/224793 A1<br>EP 4306560 A1<br>TW 202309119 A<br>CN 117120497 A<br>KR 10-2023-0173130 A | |
| JP 2023-519093 A | 10 May 2023 | US 2023/0100957 A1<br>entire text<br>JP 2024-23397 A<br>WO 2021/158636 A1<br>EP 4100469 A1<br>CN 115348990 A<br>KR 10-2022-0161276 A<br>CN 117777543 A | |
| JP 2019-001975 A | 10 January 2019 | US 2020/0325335 A1<br>entire text<br>WO 2018/230179 A1<br>EP 3640302 A1<br>TW 201905096 A<br>CN 110741048 A<br>KR 10-2020-0019139 A | |
| WO 2022/240961 A1 | 17 November 2022 | JP 2024-518528 A<br>US 2022/0379551 A1<br>EP 4337450 A1<br>CA 3217715 A1<br>CN 117460613 A<br>KR 10-2024-0006665 A<br>TW 202317390 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5890990 B
- JP 4788863 B
- JP 5384656 B
- JP 6727290 B
- JP 6687111 B
- JP 6962290 B
- JP 7342910 B